# FASCICULE DE BREVET EUROPEEN

(11) **EP 0 610 490 B1**
(45) Date de publication et mention de la délivrance du brevet: **24.09.1997**
(21) Numéro de dépôt: 93919402.3
(22) Date de dépôt: 26.08.1993
(51) Int. Cl.: A01K 3/00, H01B 5/00, H01B 5/12

(54) **CLOTURE ELECTRIQUE A RESEAU CONDUCTEUR PERFECTIONNE**
VERBESSERTES ELEKTRISCHES WEIDEZAUNNETZWERK
ELECTRIC FENCE WITH IMPROVED CONDUCTOR NETWORK

(30) Priorité: 31.08.1992 FR 9210543
(43) Date de publication de la demande: 17.08.1994
(73) Titulaire: Bellon, Catherine, F-01480 Savigneux (FR); BELLON, Jean-Michel, F-01480 Ars-sur-Formans (FR)
(72) Inventeur: Bellon, Catherine, F-01480 Savigneux (FR); BELLON, Jean-Michel, F-01480 Ars-sur-Formans (FR)
(74) Mandataire: Vuillermoz, Bruno
(86) Numéro de dépôt international: FR9300829
(87) Numéro de publication internationale: WO9405149

(56) Documents cités:
- DE-A- 4 018 195
- FR-A- 2 638 061

## Description

L'invention concerne une clôture électrique, dans laquelle la structure conductrice de l'électricité est d'un type nouveau, susceptible d'optimiser les caractéristiques et les propriétés de ces clôtures.

Les clôtures électriques sont d'un usage aujourd'hui largement répandu, compte-tenu notamment de leur facilité de mise en place, et également de leur capacité à maintenir en un lieu déterminé les animaux, plus particulièrement dans le cadre de l'élevage. De telles clôtures sont très facilement déplaçables, de sorte qu'elles autorisent une rationalisation des herbages. Dans le cas contraire de l'élevage extensif, la commodité de mise en place de telles clôtures s'avère recherchée pour réduire au minimum leur durée d'installation.

Une telle clôture électrique comprend de manière connue, outre un électrificateur, destiné à délivrer un courant électrique sous forme d'impulsions très courtes, de voltage élevé, typiquement quelques milliers de Volts, mais de faible ampérage, une clôture proprement dite, généralement constituée d'un support en matériau non conducteur de l'électricité, notamment réalisé en matériau synthétique, et de fils conducteurs électriques intégrés dans ce support. Le support, par exemple réalisé en polyéthylène, est typiquement constitué sous la forme d'un ruban tressé, tricoté voire tissé, de telle sorte à lui conférer outre une certaine résistance mécanique à l'étirement, également une bonne visibilité notamment pour les animaux, compte tenu qu'il peut être très facilement coloré dans la masse.

Comme déjà précisé, ces clôtures électriques sont destinées à être assez régulièrement modifiées dans leur mise en place au niveau des herbages, afin justement de rationaliser l'exploitation de ceux-ci. De la sorte, elles sont soumises à de nombreux pliages, dépliages et autres rembobinages. Si de telles opérations sont relativement sans incidence sur le support en matériau synthétique, en revanche on s'est rapidement aperçu qu'elles affectaient la conductivité électrique, attendu qu'on observait localement des ruptures des conducteurs. Afin de s'affranchir de telles ruptures, et notamment de les compenser, notamment en terme de conduction de l'électricité, on a proposé de faire appel à plusieurs conducteurs, présentant des points de croisement multiple, afin de pallier les ruptures locales de ceux-ci, en assurant le relai de la conduction.

Pour ce faire, on a par exemple décrit dans le document FR-A-2 638 061 une clôture électrique du type en question, comportant deux conducteurs électriques s'étendant longitudinalement le long du support de la clôture proprement dite, et un conducteur central, s'étendant d'un conducteur à l'autre sous la forme de zig-zag, et destiné à justement pallier les ruptures locales de l'un des conducteurs latéraux.

Si certes, une telle structure permet de s'affranchir dans le cas général des ruptures locales de l'un des conducteurs latéraux, en revanche, elle s'avère impropre à des utilisations répétées, compe tenu que d'une part, le conducteur central assurant les liaisons électriques entre les deux conducteurs latéraux n'est situé que d'un côté du support, et que d'autre part, en cas d'une double rupture du conducteur central et de l'un des conducteurs latéraux, la conduction de l'électricité n'est plus assurée de manière convenable et le rôle préventif de la clôture s'en trouve sinon totalement annulé, tout au moins fortement altéré.

En outre, compte tenu des pliages et dépliages fréquents occasionnés au niveau desdites clôtures, on observe de nombreuses torsions dans le sens longitudinal du ruban proprement dit, et compte tenu du fait que les conducteurs sont majoritairement d'un seul côté dudit ruban, il se crée des zones localement dépourvues de conducteurs, de sorte que les animaux au contact dudit ruban ne reçoivent qu'une décharge très faible, et en tout cas non dissuasive.

L'objet de l'invention est de pallier ces différents inconvénients. Elle propose une clôture électrique, destinée à l'aménagement des herbages et à la protection des cultures contre les intrusions des animaux, susceptible de s'affranchir de toute rupture locale des conducteurs électriques, et efficace quelle que soit sa conformation locale, suite notamment aux différents pliages et dépliages dont elle a fait l'objet.

Cette clôture électrique est constituée d'un support souple en un matériau non conducteur de l'électricité, intégrant un réseau conducteur de l'électricité. Selon l'invention, ce réseau est constituée d'une pluralité, et notamment deux, de fils conducteurs, chaque fil s'étendant périodiquement d'un bord latéral à l'autre dudit support sous une forme ondulée, et ce sur toute la longueur de celui-ci, lesdits fils étant décalés les uns par rapport aux autres dans le sens de la longueur de telle sorte à se croiser régulièrement au milieu dudit support, et se répartissent de manière sensiblement équilibrée de part et d'autre du support.

En d'autres termes, l'invention ne fait plus appel à des conducteurs latéraux reliés entre eux par un conducteur central, mais à une pluralité de conducteurs joignant les deux bords dudit ruban, et se croisant entre eux de sorte que compte tenu des nombreux croisements obtenus, et quels que soient les ruptures locales de l'un ou de plusieurs de ces conducteurs, la conduction requise est toujours relayée et donc assurée, et ce, sur les deux faces dudit support.

Dans une autre forme de réalisation avantageuse de l'invention, on observe une symétrie desdits conducteurs par rapport à la ligne médiane du support.

Selon l'invention, le support est un tricot à mailles jetées, et les fils conducteurs électriques sont intégrés dans le support lors de la réalisation de ce dernier, lesdits conducteurs électriques étant distribués par au moins deux barres à passettes du métier de tricotage permettant la réalisation du support, lesdites barres travaillant en sens inverse l'une de l'autre selon une armure telle que les conducteurs électriques se trouvent décalés d'une rangée de mailles à la suivante sur toute la largeur du tricot.

Avantageusement le support est un tricot à mailles jetées réalisé par deux barres à passettes, dont l'une travaille selon une armure chainette, et l'autre selon une armure reliant transversalement lesdites chainettes entre elles.

Ces ensembles de conducteurs sont avantageusement au nombre de quatre, répartis à raison de deux, de part et d'autre dudit support afin d'assurer une égale conduction des deux côtés de la clôture et partant, s'affranchissant des aléas de pliages et dépliages que la clôture subit.

La manière dont l'invention peut être réalisée et les avantages qui en découlent ressortiront mieux des exemples de réalisation qui suivent, donnés à titre indicatif et non limitatif à l'appui des figures annexées.

La figure 1 est une representation schématique d'un ruban constitutif de la clôture conforme à l'une des formes de réalisation de l'invention.

La figure 2 est une représentation schématique d'une autre forme de réalisation de l'invention.

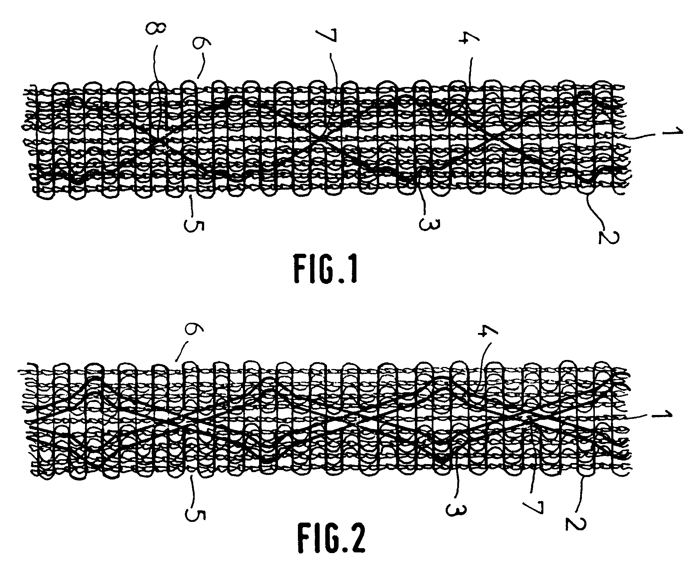

On a donc représenté sur la figure 1, un ruban constitutif de la clôture électrique conforme à l'invention. Ce ruban est réalisé par tricotage à partir de fils de polyéthylène, typiquement de diamètre de 0,3 ou 0,4 mm, et déjà teint dans la masse. Ce ruban, jouant le rôle de support, est typiquement réalisé sur un métier crochet, dont au moins deux barres à passettes (également dénommées jeteurs de fils) réalisent le tricot-support. Les fils dudit support sont ainsi répartis selon une armure chainette (1), reliés entre eux par des fils (2) assurant la cohésion dudit support, et qui peuvent être distribués par une seule barre à passette (ou jeteur), mais de préférence par deux ensembles diférents. Un tel métier crochet est décrit dans l'"Industrie Textile" de 1968.

Selon l'invention, deux fils conducteurs (3,4) sont insérés dans le support tricoté (1,2) lors de la réalisation de ce dernier. Ces fils métalliques, typiquement réalisés en acier inoxydable ou en un autre métal ou alliage métallique conducteur, d'un diamètre typique voisin de 0,15 à 0,20 mm, s'étendent d'un bord latéral (5) à l'autre (6) du support en polyéthylène. Les fils métalliques (3,4) sont intégrés dans le support (1,2) par deux barres à passettes du métier crochet permettant la réalisation du support, lesdites barres travaillant en sens inverse l'une de l'autre selon une armure telle que les conducteurs électriques (3,4) se trouvent décalés d'une rangée de mailles à la suivante sur toute la largeur du tricot, en formant des allers et retours entre les deux bords (5,6). Une telle disposition peut être obtenue par toute armure bien connue dans le domaine textile, telle que par exemple une armure type ATLAS à mailles ouvertes. On observe donc, de par cette réalisation, une forme ondulée décrite par chacun des conducteurs électriques (3,4), d'un bord à l'autre du support, et sur chacune de ses faces principales.

Selon l'invention, les deux fils sont décalés l'un par rapport à l'autre dans le sens de la longueur, de telle sorte à venir se croiser au niveau du centre du support (1,2). Les points de croisement des deux fils conducteurs (3,4) s'effectuent au milieu d'un même point de chainette du support, de telle sorte à assurer un contact étroit et permanent entre les deux fils (3,4), et ainsi promouvoir la conduction électrique de l'un à l'autre en cas de défaillance locale inhérente à une rupture de l'un d'eux. En outre, et afin de favoriser la conduction électrique au niveau de ces points de croisement, aucun fil (2) de liage des chainettes (1) ne maille à leur niveau. Ces nombreux points de croisement (7, 8) garantissent de la sorte la conduction de l'électricité, quels que soient le lieu et le nombre de ruptures locales des deux conducteurs (3,4).

En outre et avantageusement, afin d'augmenter cette conduction, les conducteurs (3, 4) peuvent être plurifilamentaires (typiquement de cinq à dix fils), et se présentent sous forme de faisceaux plats, augmentant en outre le caractère répulsif des clôtures vis à vis des animaux puisqu'ils augmentent la surface de contact avec ceux-ci au cas ou l'animal touche la clôture.

En outre, selon une caractéristique avantageuse de l'invention inhérente au mode de réalisation de la cloture, lesdits éléments (3) ou (4) passent alternativement dessus et dessous le support au niveau de chacun des fils de liage (2) des chainettes (1) constitutives du support tricoté (1,2). De la sorte, on obtient un ruban de clôture comportant des conducteurs électriques de manière continue et équilibrée sur chacune de ses faces. Ainsi quelle que soit la conformation locale dudit ruban, il présente toujours une surface importante de conduction électrique au contact duquel l'animal peut entrer et donc être répulsé.

Selon une autre forme de réalisation représentée sur la figure 2, les fils conducteurs sont au nombre de quatre, réparties selon deux jeux de deux conducteurs. Comme dans l'exemple précédemment décrit, chaque jeu décrit des allers et retours entre les deux bords (5,6) du support tricoté (1,2), matérialisant une profil ondulé. Les deux fils d'un même jeu sont sensiblement parallèles l'un par rapport à l'autre, et sont légèrement décalés d'une distance correspondant à la distance séparant deux chainettes consécutives du support tricoté.

Dans les deux exemples illustrés par les figures 1 et 2, le produit est obtenu sur un métier à tricoter à mailles jetées du type "jauge 7" (sept aiguilles par centimètre), et comportant au moins quatre ensembles de distributeurs de fils, dits "barres à passettes" ou "jeteurs de fil", en plus d'un ensemble permettant de réaliser des chainettes parallèles. Dans ces exemples, les jeteurs de fils sont enfilés à disposition, c'est à dire selon une alternance de distributeurs alimentés en fils, et d'autres distributeurs ne comportant pas de fil. L'enfilage est tel qu'à la tombée du métier, on obtient un réseau tricoté d'environ 15 mm de largeur, réalisé sur 9 aiguilles. En fonction de la largeur du métier, et du nombre d'aiguilles **n** qu'il comporte, il est donc possible de réaliser n/10 bandes identiques séparées les unes des autres.

La structure générale d'un tel support obtenu est bien connu (voir par exemple la revue spécialisée "Knitted Outweartimes" july 22, 1968 par k.D. DARLINGTON pages 42 et suivantes) ladite structure étant cependant adaptée par la sélection tant dans l'enfilage que de l'armure de chaque barre distribuant les fils.

Selon les modes préférentiels de réalisation conforme à l'invention, en plus des éléments formant chainette avec du fil synthétique, notamment en polyéthylène :
- deux barres à passettes sont alimentées en fil synthétique (notamment crin polyéthylène de 0,3 à 0,4 mm de diamètre), et sont destinées à réaliser en liaison avec les chainettes le support tricoté souple (1,2), et lui conférant une structure pratiquement bloquée en long et en large ;
- les deux autres barres à passettes sont alimentées en fil métallique conducteur (par exemple acier inoxydable de 0,15 à 0,20 mm de diamètre), et travaillent en opposition, selon une armure distribuant les dits fils conducteurs (3,4) en biais d'un bord à l'autre de la bande tricotée formée (1,2), et ce, de telle sorte que lesdits fils conducteurs (3,4) se croisent au centre de ladite bande, et que sur les bords de celle-ci, c'est à dire au niveau des zones où lesdits fils conducteurs changent de direction, ils soient "emprisonnés" non pas dans la première, respectivement la dernière (neuvième) colonne de mailles, mais dans la deuxième respectivement l'avant dernière, ici la huitième colonne de mailles.

Les deux exemples qui suivent illustrent ce mode de réalisation de manière concrète.

Une barre à passettes travaille selon une armure chainette de manière à former 9 colonnes de mailles, reliées entre elles de manière à former une structure souple qui emprisonne les fils conducteurs.

Les armures et l'enfilage des deux barres distribuant les fils reliant les colonnes de mailles ainsi que celles des deux barres distribuant les fils conducteurs sont les suivantes, en prenant comme point de départ un rapport d'armure :

### EXEMPLE I

Rapport d'amure : 9 colonnes/18 rangées
barre 1 : distribution d'un fil conducteur
   enfilage : 2 vides/ 1 plein/6 vides
   armure: 2/3/4/5/6/7/7/8/7/7/6/5/4/3/2/2/1/2
barre 2 : distribution d'un fil synthétique reliant les collones de mailles
   enfilage : 2 pleins/3 vides/2 pleins/2 vides
   armure: 1/4/1/4/1/4/1/4/1/4/1/4/1/4/1/4/1/4
barre 3 : distribution d'un fil synthétique reliant les colonnes de mailles
   dans la partie centrale
   enfilage : 3 vides/1 plein/5 vides
   armure: 1/4/1/1/4/1/4/1/4/1/4/1/1/4/1/4/1/4
barre 4 : distribution d'un fil conducteur
   enfilage : 7 vides/1 plein/1 vide
   armure: 7/6/5/4/3/2/2/1/2/2/3/4/5/6/7/7/8/7

On obtient un article tel qu'illustré sur la figure 1, dans lequel les deux fils conducteurs sont intégrés au réseau tricoté en s'étendant en biais sur la largeur d'un bord à l'autre dudit réseau et en se croisant au niveau de la zone médiane.

Il convient de noter, que les fils conducteurs (3,4) étant distribués par les barres externes, se trouvent donc disposés sur les faces externes de la structure, garantissant l'optimisation du contact potentiel de la cloture avec l'animal, et partant son efficacité. De plus, et comme déjà précisé, du fait de l'armure spécifique utilisée pour relier les chainettes (1) entre elles, on aboutit au niveau des zones où les fils conducteurs (3,4) se croisent, à un contact parfait entre ces derniers, puisque il n'existe à ce niveau aucun fil de liaison des chainettes.

### EXEMPLE II

Distribution de deux paires de fils conducteurs.

Rapport d'armures : 9 colonnes/18 rangées
barre 1 : distribution d'une paire de fils conducteurs.
   enfilage : 1 vide/2 pleins/6 vides
   armure: 1/2/3/3/4/4/5/5/6/7/6/5/5/4/4/3/3/2
barre 2 : distribution d'un fil synthétique reliant les chainettes
   enfilage : 2 pleins/3 vides/2 pleins/2 vides
   armure: 1/4/1/4/1/4/1/4/1/4/1/4/1/4/1/4/1/4
barre 3 : distribution d'un fil synthétique reliant les chainettes dans la
   partie centrale.
   enfilage : 5 vides/1 plein/3 vides
   armure: 4/1/4/1/1/4/4/1/4/1/4/1/4/4/1/1/4/1
barre 4 : distribution d'une paire de fils conducteurs en sens inverse de
   la première paire distribuée par la barre 1.
   enfilage : 7 vides/2 pleins
   armure: 7/6/5/5/4/4/3/3/2/1/2/3/3/4/4/5/5/6

On obtient ainsi un produit tel qu'illustré sur la figure 2. Comme dans le cas de la figure 1, les conducteurs, cette fois-ci sous la forme de paires, sont intégrés dans le réseau synthétique (1,2), et décrivent également des ondulations d'un bord à l'autre dudit réseau.

Les produits obtenus développent de par leur conception même de très bonnes propriétés de conduction de l'électricité, quelles que soient les conditions rigoureuses ou des nombreuses manipulations auxquelles ils peuvent être soumis.

L'invention trouve donc tout naturellement son application dans les clôtures pour l'élevage, et tous ses emplois connexes.

## Revendications

1. Clôture électrique constituée d'un support souple (1,2) réalisé en un matériau non conducteur de l'électricité, intégrant un réseau conducteur d'électricité (3,4), **caractérisée** en ce que ledit réseau (3,4) est constituée d'une pluralité d'ensembles de fils conducteurs, au moins deux, chaque ensemble s'étendant périodiquement en biais d'un bord latéral (5) à l'autre (6) dudit support sous une forme ondulée, et ce sur toute la longueur de celui-ci, lesdits ensembles étant décalés les uns par rapport aux autres dans le sens de la longueur de telle sorte à se croiser régulièrement au milieu dudit support, et se répartissent de manière sensiblement équilibrée de part et d'autre dudit support.

2. Clôture électrique selon la revendication 1, **caractérisée** en ce que les ensembles (3,4) de conducteurs sont réparties symétriquement par rapport à la ligne médiane du support (1,2).

3. Clôture électrique selon l'une des revendications 1 et 2, **caractérisé** en ce que le support (1,2) est un tricot à mailles jetées, et en ce que les fils conducteurs électriques (3,4) sont intégrés dans le support lors de la réalisation de ce dernier, lesdits conducteurs électriques étant distribués par au moins deux barres à passettes du métier de tricotage permettant la réalisation du support, lesdites barres travaillant en sens inverse l'une de l'autre selon une armure telle que les conducteurs électriques (3,4) se trouvent décalés d'une rangée de mailles à la suivante sur toute la largeur du tricot.

4. Clôture électrique selon la revendication 3, **caractérisée** en ce que le support (1,2) est un tricot à mailles jetées réalisé par au moins deux barres à passettes, dont l'une travaille selon une armure chainette, et l'autre selon une armure reliant transversalement lesdites chainettes entre elles.

5. Clôture électrique selon l'une des revendications 3 et 4, **caractérisée** en ce que les ensembles de conducteurs (3,4) sont au nombre de quatre, répartis à raison de deux paires de deux conducteurs, de part et d'autre dudit support afin d'assurer une égale conduction des deux côtés de la clôture et partant, s'affranchissant des aléas de pliages et dépliages que la clôture subit.

6. Clôture électrique selon l'une des revendications 1 à 5, **caractérisée** en ce que les ensembles (3,4) de conducteurs passent alternativement dessus et dessous chaque intersection avec les fils de liaison (2) des chaînettes (1) dudit support, de sorte à permettre une égale répartition des conducteurs électriques de part et d'autre du support.

7. Clôture électrique selon l'une des revendications 1 à 6, **caractérisée** en ce que les points de croisement (7,8) des fils conducteurs entre eux sont totalement exempts de tout fil de liaison (2) des chainettes (1) entre elles .

## Claims

1. Electric fence consisting of a flexible support (1, 2) produced from an electrically non conducting material, incorporating an electrically conducting network (3, 4), characterized in that the said network (3, 4) consists of a plurality of sets of conductor wires, at least two, each set extending periodically slantwise from one lateral edge (5) to the other (6) of the said support in an undulating shape, over the whole length of the latter, the said sets being offset with respect to one another in the direction of the length in such a way as to cross over regularly in the middle of the said support, and are distributed in a substantially equalised way on either side of the said support.

2. Electric fence according to Claim 1, characterized in that the sets (3, 4) of conductors are distributed symmetrically with respect to the median line of the support (1, 2).

3. Electric fence according to one of Claims 1 and 2, characterized in that the support (1, 2) is a knitted product with looped stitches, and in that the electrical conductor wires (3, 4) are integrated into the support at production of the latter, the said electrical conductors being distributed by at least two guide bars of the knitting machine, allowing the support to be produced, the said bars working in the opposite direction to one another according to a weave pattern such that the electrical conductors (3, 4) are offset from one row of stitches to the following one over the whole width of the knitting.

4. Electric fence according to Claim 3, characterized in that the support (1, 2) is a knitted product with looped stitches which is produced by at least two guide bars, one of which works according to a chain weave pattern and the other according to a weave pattern transversely linking the said chains together.

5. Electric fence according to one of Claims 3 or 4, characterized in that the sets of conductors (3, 4) are four in number, distributed in two pairs of two conductors, on either side of the said support so as to ensure equal conduction on both sides of the fence and, that being so, overcoming problems of random folding and unfolding which the fence undergoes.

6. Electric fence according to one of Claims 1 to 5, characterized in that the sets (3, 4) of conductors pass alternately above and below each intersection with the filaments (2) for linking the chains (1) of the said support, in such a way as to allow equal distribution of the electrical conductors on either side of the support.

7. Electric fence according to one of Claims 1 to 6, characterized in that the crossing points (7, 8) of the conductor wires between each other are completely free of any filament (2) for linking the chains (1) together.

## Patentansprüche

1. Elektrischer Zaun, bestehend aus einem flexiblen Träger (1,2), der aus einem nicht elektrisch leitenden Material hergestellt ist und ein elektrisch leitendes Netz (3,4) umfaßt, **dadurch gekennzeichnet**, daß das genannte Netz (3,4) aus einer Vielzahl, mindestens zwei, leitenden Drahtanordnungen besteht, wobei jede Anordnung sich periodisch schräg von einem (5) zum anderen seitlichen Rand (6) des genannten Trägers über dessen gesamte Länge in welliger Form erstreckt, wobei die genannten Anordnungen gegeneinander in Längsrichtung derart versetzt sind, daß sie einander regelmäßig in der Mitte des genannten Trägers kreuzen, und sie ungefähr gleichmäßig auf beiden Seiten des genannten Trägers verteilt sind.

2. Elektrischer Zaun nach Anspruch 1, **dadurch gekennzeichnet**, daß die Leiteranordnungen (3,4) symmetrisch in bezug auf die Mittellinie des Trägers (1,2) verteilt sind.

3. Elektrischer Zaun nach einem der Ansprüche 1 und 2, **dadurch gekennzeichnet**, daß der Träger (1,2) eine Kettenwirkware ist und daß die elektrisch leitenden Drähte (3,4) in den Träger bei dessen Herstellung eingefügt werden, wobei die genannten elektrischen Leiter von wenigstens zwei Legeschienen der Wirkmaschine verteilt werden, mit welcher der Träger hergestellt wird, wobei die genannten Schienen in einander entgegengesetzten Richtungen gemäß einer derartigen Bindung arbeiten, so daß die elektrischen Leiter (3,4) sich über die gesamte Breite der Wirkware von einer Maschenreihe zur nächsten versetzt befinden.

4. Elektrischer Zaun nach Anspruch 3, **dadurch gekennzeichnet**, daß der Träger (1,2) eine mit wenigstens zwei Legeschienen hergestelltes Kettenwirkware ist, wobei eine Schiene gemäß einer Kettenbindung arbeitet und die andere gemäß einer Bindung, welche die genannten Ketten quer miteinander verbindet.

5. Elektrischer Zaun nach einem der Ansprüche 3 und 4, **dadurch gekennzeichnet**, daß die Anzahl der Leiteranordnungen (3,4) vier ist, wobei diese in zwei Paaren von je zwei Leitern auf beiden Seiten des genannten Trägers verteilt sind, um eine gleiche Leitung der beiden Seiten des Zauns zu gewährleisten und somit den Risiken des Zusammen- und Auseinanderfaltens, dem der Zaun unterzogen wird, entgegen zu wirken.

6. Elektrischer Zaun nach einem der Ansprüche 1 bis 5, **dadurch gekennzeichnet**, daß die Leiteranordnungen (3,4) abwechselnd über und unter jedem Kreuzungspunkt mit den Bindefäden (2) der Ketten (1) des genannten Trägers verlaufen, um eine gleiche Verteilung der elektrischen Leiter auf beiden Seiten des Trägers zu ermöglichen.

7. Elektrischer Zaun nach einem der Ansprüche 1 bis 6, **dadurch gekennzeichnet**, daß die Kreuzungspunkte (7,8) der Leitungsdrähte miteinander vollständig frei von Bindefäden (2) der Ketten (1) sind.
